# EUROPÄISCHE PATENTSCHRIFT

(11) **EP 2 411 696 B1**
(45) Veröffentlichungstag und Bekanntmachung des Hinweises auf die Patenterteilung: **06.03.2013**
(21) Anmeldenummer: 10716274.5
(22) Anmeldetag: 15.03.2010
(51) Int. Cl.: F16F 13/28, F16F 13/14

(54) **ELASTOMERES BUCHSENLAGER MIT SCHALTBARER STEIFIGKEIT**
ELASTOMERIC PLAIN BEARING HAVING SWITCHABLE RIGIDITY
PALIER À DOUILLE ÉLASTOMÈRE À RIGIDITÉ RÉGLABLE

(30) Priorität: 23.03.2009 DE 102009001757
(43) Veröffentlichungstag der Anmeldung: 01.02.2012
(73) Patentinhaber: ZF Friedrichshafen AG, 88038 Friedrichshafen (DE); Audi AG, 85045 Ingolstadt (DE)
(72) Erfinder: LOHEIDE, Stefan, 49134 Wallenhorst (DE); SIEMER, Hubert, 49413 Dinklage (DE); CONRAD, Thomas, 91757 Treuchtlingen (DE)
(86) Internationale Anmeldenummer: PCT/DE2010/050012
(87) Internationale Veröffentlichungsnummer: WO 2010/108490

(56) Entgegenhaltungen:
- EP-A2- 0 335 007
- DE-A1- 3 910 447
- DE-A1- 10 252 188
- FR-A1- 2 555 688
- JP-A- 1 193 431
- JP-A- 60 172 743
- JP-A- 61 270 533
- JP-A- 62 056 639
- JP-A- 62 167 949
- US-A1- 2002 185 797

## Beschreibung

Die Erfindung betrifft ein elastomeres Buchsenlager, dessen radiale Steifigkeit veränderlich ist. Dabei ist das Lager zwischen einem Zustand, bei dem es eine eher niedrige Steifigkeit aufweist, und einem Zustand mit einer demgegenüber höheren Steifigkeit umschaltbar. Das Lager besteht im Wesentlichen aus einem vorzugsweise rohrförmigen metallischen Innenteil, einem zylindrischen Außenteil und einem zwischen dem Innenteil und dem Außenteil angeordneten, zumindest mit dem Innenteil durch Vulkanisation verbundenen elastomeren Lagerkörper sowie einer die vorgenannten Elemente des Lagers aufnehmenden Lagerhülse. In dem Lagerkörper sind mindestens zwei Kammern zur Aufnahme eines Fluids angeordnet.

Elastomere Buchsenlager werden insbesondere im Fahrzeugbau in einem großen Umfang eingesetzt. Hier dienen sie vorzugsweise zur Lagerung von Teilen des Fahrwerks. Im Hinblick auf den Fahrkomfort werden dabei an die Lager insoweit hohe Anforderungen gestellt, als sie sowohl durch Fahrbahnunebenheiten verursachte Schwingungen von der Fahrgastzelle fernhalten, als auch die Fahrgastzelle gegenüber Aggregatgeräuschen weitgehend isolieren sollen. Aufgrund dieser Feder- und Dämpfungseigenschaften kommt den Lagern eine große Bedeutung zu, wobei sie zudem in Gefahrensituationen ein Größtmaß an Sicherheit und darüber hinaus eine Unterstützung der Elastokinematik bieten sollen.

Im Hinblick auf die Forderung, sowohl niederfrequente, durch Fahrbahnunebenheiten verursachte Schwingungen als auch durch das Fahrzeugaggregat verursachte hochfrequente akustische Schwingungen wirksam zu dämpfen, ist es möglich, durch die Variation der Geometrie sowie der Härte der Elastizität des Lagerkörpers (im Allgemeinen Gummi) das Verhalten der Lager unterschiedlichen Anforderungen anzupassen. Bei den derzeit in Serie eingesetzten, zumeist passiven Ausführungsformen der Lager gilt es insoweit, stets einen Kompromiss hinsichtlich der Dämpfung von Schwingungen unterschiedlicher Frequenz zu finden. Vorteilhafter ist es jedoch, die Lager aktiv auszubilden, das heißt durch entsprechende konstruktive Maßnahmen auf der Basis verschiedenster Informationen aus dem Fahrzeug eine Schaltbarkeit ihres Steifigkeitsverhaltens zur automatischen Adaption an die jeweilige Fahr- und Belastungssituation zu ermöglichen.

Eine für Buchsenlager aus dem Stand der Technik bekannte Möglichkeit, die Steifigkeit zu schalten, besteht darin, die Lager für den Übergang in einen Zustand hoher Steifigkeit axial einzuzwängen. Hierfür wird in geeigneter Weise durch den Einsatz elektrischer oder hydraulischer Mittel auf die Lagergeometrie, das heißt insbesondere auf den Lagerkörper, in der axialen Richtung eingewirkt. Buchsenlager der genannten Art werden beispielsweise in der DE 10 2006 040 958 A1 und der DE 10 100 49 140 A1 beschrieben. Eine weitere Möglichkeit besteht darin, den Freiweg der Lager in der Arbeitsrichtung zu reduzieren und somit die Steifigkeit vorübergehend anzuheben. Auch zu diesem Zweck werden beispielsweise elektrische Schaltmittel eingesetzt. Beispiele hierfür werden durch die DE 10 2005 028 563 A1 und die DE 103 30 877 A1 offenbart.

Bei den entsprechend den vorgenannten Druckschriften ausgebildeten Lagern wird für die Umschaltung ihres Steifigkeitsverhaltens eine vergleichsweise hohe Leistung benötigt. Dies hängt damit zusammen, dass das Lager beim Umschalten der Steifigkeit, unabhängig von seiner augenblicklichen Lage beziehungsweise Position, immer in eine definierte Position bewegt werden muss.

Eine Reduktion der für das Umschalten der Steifigkeit erforderlichen Leistung wird durch Ausbildungsformen elastomerer Lager erreicht, welche sich von dem Grundprinzip einer Fixierung des Lagers in einer vorbestimmten Position lösen. Dies wird mittels Lagern erreicht, die mindestens zwei mit einem Fluid gefüllte und miteinander durch einen Kanal verbundene Kammern aufweisen. Die Schaltbarkeit der Steifigkeit wird dadurch realisiert, dass wechselweise ein Fluidaustausch zwischen den Kammern zugelassen oder unterdrückt wird. Im Bereich einer bei gesperrtem Fluidaustausch mit dem Fluid gefüllten Kammer stellt sich dabei aufgrund der Inkompressibilität des Fluids eine hohe radiale Steifigkeit ein, während die radiale Steifigkeit im Bereich der anderen, vom Fluid entleerten Kammer durch die Elastizität des elastomeren Lagerkörpers beziehungsweise des Gummis gering ist.

Eine in mehreren Druckschriften des Standes der Technik beschriebene Möglichkeit des wechselweisen Zulassens oder Unterdrückens eines Fluidaustausches zwischen zwei Kammern besteht darin, beim Schaltvorgang die Viskosität des Fluids zu ändern. So wird beispielsweise durch die DE 39 10 447 A1 eine Lösung beschrieben, nach welcher es sich bei dem Fluid um eine elektrorheologische Flüssigkeit handelt, deren Viskosität mittels in das Dämpfungsmittel beziehungsweise in die seiner Aufnahme dienenden Kammern hineinragender Elektroden durch entsprechende Schaltvorgänge verändert wird. Eine andere beispielsweise in der EP 1 705 400 A1 beschriebene Möglichkeit besteht in der Verwendung einer magnetorheologischen Flüssigkeit und deren Viskositätsänderung durch unterschiedliche, auf die Flüssigkeit einwirkende magnetische Felder. In den vorgenannten Lösungen wirken die beschriebenen Versteifungsmechanismen in der Regel parallel zur Steifigkeit des Lagerbeziehungsweise Tragkörpers. Grundsätzlich ist es jedoch auch möglich, hierbei eine Reihenschaltung zu realisieren. Den zuletzt beschriebenen Lösungen ist das Grundprinzip gemeinsam, zur Steifigkeitserhöhung die Bewegung des den Lagerkörper ausbildenden Elastomers durch die Inkompressibilität des Dämpfungsmittels beziehungsweise des Fluids zu verhindern. Nachteilig ist es hierbei jedoch, dass sich dabei in den Dämpfungsmittelkammern sehr hohe Drücke aufbauen. Hierdurch wird die Dauerhaltbarkeit der Lager beeinträchtigt.

Eine weitere Möglichkeit eines Fluidausfausches nach der Präambel von Anspruch 1 zeigt die JP 60172743.

Aufgabe der Erfindung ist es, eine alternative Lösung für ein hinsichtlich seiner Steifigkeit schaltbares elastomeres Buchsenlager anzugeben. Dabei sollen die zuvor genannten Nachteile des Standes der Technik vermieden werden, wozu das Lager so zu gestalten ist, dass zur Gewährleistung seiner Schaltbarkeit weder hohe Leistungen benötigt werden, noch seine Dauerlauffestigkeit durch eine hohe Beanspruchung seiner Elemente beeinträchtigt wird.

Die Aufgabe wird durch ein elastomeres Buchsenlager mit den Merkmalen des Hauptanspruchs gelöst. Vorteilhafte Aus- beziehungsweise Weiterbildungen des erfindungsgemäßen Buchsenlagers sind durch die Unteransprüche gegeben. Das zur Lösung der Aufgabe vorgeschlagene Buchsenlager besteht, wie grundsätzlich bekannt, aus einem zylinderförmigen metallischen Innenteil, einem das Innenteil umgebenden rohrförmigen Außenteil, einem zwischen dem Innenteil und dem Außenteil angeordneten, mit ihnen durch Vulkanisation verbundenen elastomeren Lagerkörper und einer die vorgenannten Teile aufnehmenden Lagerhülse. In dem Lager ist mindestens ein Kammerpaar mit zwei Arbeitskammern zur Aufnahme eines Fluids ausgebildet, welche bezüglich der Umfangsrichtung des Lagers versetzt angeordnet sind. Zur Realisierung der Schaltbarkeit der Steifigkeit des Lagers ist mindestens ein Aktor vorgesehen, durch welchen mit einem Schaltvorgang die Sperrung oder Freigabe des Zuflusses von Dämpfungsmittel in mindestens eine der Arbeitskammern beziehungsweise des Abflusses von Dämpfungsmittel aus mindestens einer der Arbeitskammern und damit eine Veränderung der radialen Steifigkeit im Bereich der Arbeitskammern ermöglicht ist. Soweit das Buchsenlager wie vorstehend dargestellt und im Hauptanspruch charakterisiert, mindestens ein Paar von Arbeitskammern aufweist, schließt dies die Möglichkeit ein, dass in dem Lager gegebenenfalls auch mehrere derartige Kammerpaare ausgebildet sind. So ist es denkbar, dass zum Beispiel Buchsenlager mit einer großen axialen Länge über mehrere Kammerpaare verfügen, welche zueinander in axialer Richtung versetzt angeordnet sind, wobei jedoch die Kammern eines jeden Paares bezüglich der Lagerumfangsrichtung versetzt angeordnet sind. Denkbar ist es aber auch, in der Umfangsrichtung des Lagers mehrere Kammerpaare anzuordnen. Die nachfolgenden Darstellungen beziehen sich im Allgemeinen auf die für die Praxis relevanteste Ausbildungsform mit einem Kammerpaar, bestehend aus zwei in der Lagerumfangsrichtung versetzt angeordneten Arbeitskammern, ohne dass das erfinderische Lösungsprinzip hierdurch beschränkt wäre.

Erfindungsgemäß ist der Lagerkörper des die Aufgabe lösenden Buchsenlagers durch mindestens ein darin parallel zur Lagerachse angeordnetes Einlegeelement, vorzugsweise ein Zwischenblech, in der radialen Richtung in mindestens zwei Federpakete unterteilt. Dabei wird durch das radial äußere Federpaket, aufgrund dessen, dass dieses die Arbeitskammern aufnimmt, ein Schaltpaket ausgebildet. In erfindungswesentlicher Weise sind die Arbeitskammern jeweils in mehrere sich innerhalb des Lagerkörpers und des Außenteils in der radialen Richtung erstreckende Kammerabschnitte und in mindestens einen, sich in axialer Richtung erstreckenden und dabei Kammerabschnitte mit radialer Erstreckung miteinander verbindenden, Kammerabschnitt unterteilt. Durch die in radialer Richtung in ihn hineinragenden Kammerabschnitte der Arbeitskammern ist der elastomere Lagerkörper in dem von dem Einlegeelement beziehungsweise Zwischenblech und dem Außenteil begrenzten Schaltpaket in axialer Richtung segmentiert. Vorzugsweise sind dabei alle sich radial erstreckenden Kammerabschnitte durch einen sich innerhalb des Außenteils axial erstreckenden Kammerabschnitt miteinander verbunden. Grundsätzlich denkbar, wenngleich auch fertigungstechnisch ungünstiger, ist aber gemäß dem allgemeinen Lösungsprinzip auch eine Ausbildungsform, bei der sich radial verlaufende und axial verlaufende Kammerabschnitte im Wechsel mäanderförmig aneinander anschließen.

Die Erfindung geht von der Überlegung aus, dass die Steifigkeit mit dem Verhältnis zwischen gebundener und freier Oberfläche des Elastomers steigt. Dabei spielt die Tatsache eine entscheidende Rolle, dass Gummi und vergleichbare Elastomere inkompressibel sind. Sofern kein Fluid in einer Arbeitskammer enthalten ist, wird die freie Oberfläche des Elastomers im Bereich dieser Kammer durch die äußeren Stirnflächen der in dem Schaltpaket ausgebildeten Segmente des elastomeren Lagerkörpers bestimmt. Beim Einfedern kann das Elastomer in die Freiräume ausweichen, welche von den in den Lagerkörper hineinragenden und ihn segmentierenden Kammerabschnitten der betreffenden Arbeitskammer gebildet sind. Die Steifigkeit ist hierdurch im Bereich dieser Arbeitskammer verhältnismäßig gering. Sofern die Arbeitskammer jedoch mit einem Fluid und damit mit einem inkompressiblen Medium gefüllt ist, ist ein Ausweichen des Elastomers in die vorgenannten Zwischenräume nicht mehr möglich. Vielmehr haben sowohl das Elastomer der Segmente des Lagerkörpers als auch das Fluid unter radialer Last, miteinander konkurrierend, das Bestreben, sich in die von den sich radial erstreckenden Kammerabschnitten der Arbeitskammern gebildeten Freiräume hinein auszudehnen. Dabei werden die Segmente beziehungsweise Elastomerstege zwischen den radialen Kammerabschnitten der Arbeitskammern jeweils von beiden Seiten durch das auf sie drückende Fluid abgestützt, so dass in dem Elastomer im Bereich dieser Segmente geringe Dehnungen auftreten. Je größer aber das Verhältnis der freien Oberfläche des Elastomers vor und nach der Befüllung einer Arbeitskammer mit dem fluiden Dämpfungsmittel ist, desto größer ist die im Bereich der betreffenden Arbeitskammer erreichbare Spreizung beziehungsweise Veränderbarkeit der radialen Steifigkeit bei gegebenem Kammerdruck. Das bedeutet aber auch: Je größer das Verhältnis der freien Flächen vor und nach der Befüllung der Arbeitskammer mit dem Fluid bei geforderter Steifigkeitsspreizung ist, umso geringer ist der zu erwartende Kammerdruck. Mit der erfindungsgemäßen Ausbildung der Arbeitskammern und der dadurch in dem Schaltpaket erreichten Segmentierung des Lagerkörpers wird die zur Verfügung stehende freie Oberfläche des Elastomers vergrößert. Dies führt, wie zuvor dargestellt, dazu, dass die Belastung des Elastomers auch bei einer hohen Steifigkeitsspreizung verhältnismäßig gering ist, so dass sich hierdurch das Dauerlaufverhalten beziehungsweise die Standfestigkeit des Lagers verbessert.

Entsprechend einer möglichen Ausbildungsform des erfindungsgemäßen Lagers wird dessen Schaltbarkeit hinsichtlich der Steifigkeit durch das Sperren oder die vorübergehende Freigabe eines die Arbeitskammern miteinander verbindenden Kanals erreicht. Eine andere Ausbildungsform ist dadurch gegeben, dass der Fluidaustausch zwischen den Arbeitskammern und mindestens einer zusätzlich vorgesehenen, axial unterhalb und/oder oberhalb der Arbeitskammern angeordneten Ausgleichskammer mit hoher Volumennachgiebigkeit durch einen Schaltvorgang gesperrt oder vorübergehend freigegeben werden kann. Bei der oder den vorgenannten Ausgleichskammern handelt es sich um Kammern, vergleichbar den aus Aggregatlagern bekannten Ausgleichskammern, mit einem gegenüber den Arbeitskammern größeren Volumen. Aufgrund des verhältnismäßig großen Volumens einer solchen Ausgleichskammer wirkt sich Fluid, welches aus einer Arbeitskammer in die Ausgleichskammer einfließt, bezüglich des Kammerdrucks der Ausgleichkammer im Grunde nicht Druck erhöhend aus. Im Gegensatz dazu wirkt einfließendes Fluid sich bei den Arbeitskammern unmittelbar Druck erhöhend aus. Durch das beispielsweise beim Einsatz in einem Kraftfahrzeug in Abhängigkeit von der Fahr- und/oder Belastungssituation aufgrund von Informationen aus dem Fahrzeug selbsttätige Sperren der die Ausgleichskammer oder die Ausgleichskammern mit den Arbeitskammern verbindenden Kanäle und ihre vorübergehende Freigabe kann ein solchermaßen ausgebildetes Buchsenlager zwischen zwei grundsätzlichen Schaltzuständen wechseln. Dabei ist in einem ersten Schaltzustand des Buchsenlagers für beide Arbeitskammern der Zufluss von Fluid aus der jeweiligen Ausgleichskammer gesperrt. Das Buchsenlager weist in diesem Schaltzustand, in dem die Arbeitskammern von Fluid entleert sind, eine geringe radiale Steifigkeit auf. In einem zweiten Schaltzustand, bei welchem der Abfluss von Fluid in die jeweilige Ausgleichskammer für beide mit Fluid gefüllte Arbeitskammern gesperrt ist, weist das Buchsenlager hingegen eine hohe radiale Steifigkeit auf.

Das Sperren oder Freigeben des Zuflusses von Fluid zu einer Kammer und des Abflusses von Fluid aus einer Kammer kann auf unterschiedliche Weise erfolgen. Vorzugsweise wird dazu in dem die Arbeitskammern miteinander verbindenden Kanal oder in dem oder den die Arbeitskammern und die Ausgleichskammer oder -kammern miteinander verbindenden Kanäle ein schaltbares Ventil angeordnet. Denkbar ist es aber auch, als fluides Dämpfungsmittel eine elektrorheologische oder eine magnetorheologische Flüssigkeit zu verwenden und durch eine entsprechende Beschaltung von in das Dämpfungsmittel hineinragenden Elektroden oder auf dieses einwirkenden magnetischen Aktoren die Viskosität des fluiden Dämpfungsmittels zu verändern und diesem hierdurch das Passieren eines der vorgenannten Kanäle zu ermöglichen oder zu sperren.

Der zwischen den Arbeitskammern gebildete Kanal oder die die Arbeitskammern jeweils mit einer Ausgleichskammer verbindenden Kanäle sind vorzugsweise gegenüber ihrer Länge verhältnismäßig weit auszubilden, damit der jeweilige Kanal mit den Nachgiebigkeiten der Arbeitskammern erst möglichst spät, das heißt bei höheren Frequenzen, in Resonanz geht. Hierdurch soll vermieden werden, dass durch möglicherweise in beziehungsweise an einem Kanal auftretende Steifigkeiten Frequenzen im akustischen Bereich hart übertragen werden. Eine besonders vorteilhafte Ausbildungsform eines mit wenigstens einer Ausgleichskammer hoher Volumennachgiebigkeit, vergleichbar der Kammer eines Motorlagers, ausgebildeten Buchsenlagers ist dadurch gegeben, dass das Verhältnis zwischen der Kanalweite und der Länge des die Ausgleichskammer mit einer Arbeitskammer verbindenden Kanals vorzugsweise 1 oder größer ist.

Eine vorgesehene Weiterbildungsmöglichkeit der Erfindung bezieht sich auf die Anordnung zusätzlicher, sich ebenfalls in axialer Richtung erstreckender Einlegeelemente beziehungsweise Zwischenbleche im Elastomer des inneren, als Arbeitspaket fungierenden Federpakets. Hierdurch wird erreicht, dass trotz hoher Drucksteifigkeit nur relativ geringe Schubsteifigkeiten auftreten.

Details der zuvor beschriebenen Erfindung sollen anhand von Zeichnungen nochmals erläutert werden. Im Einzelnen zeigen die Zeichnungen:
- Fig. 1:: ein erfindungsgemäß gestaltetes Buchsenlager in einer Schnittdarstellung mit einem axial geführten Schnitt,
- Fig. 2:: das Buchsenlager nach Fig. 1 mit einem radial, entlang der Linie A-A geführten Schnitt.

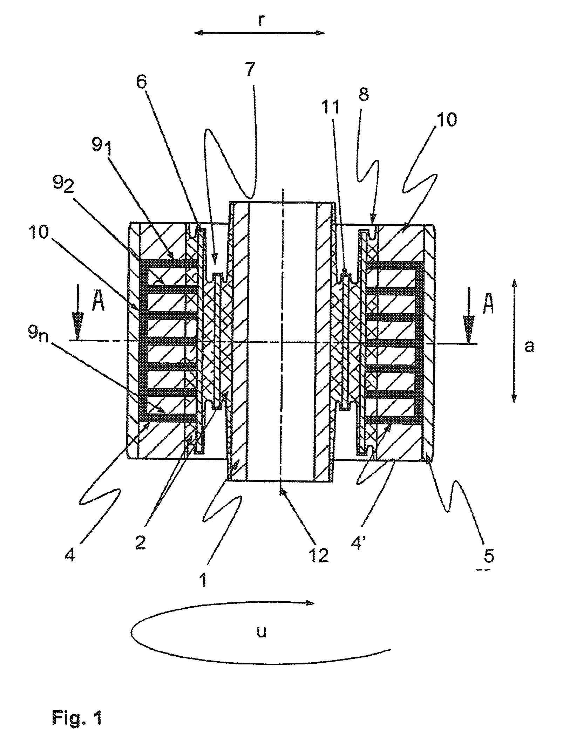

Die Fig. 1 zeigt die Schnittdarstellung eines entsprechend der Erfindung gestalteten elastomeren Buchsenlagers, wobei auf die Darstellung der das Umschalten der Steifigkeit bewirkenden Aktoren verzichtet wurde. Insoweit soll die Zeichnung lediglich der nochmaligen Erläuterung der speziell gestalteten Geometrie eines nach der Erfindung ausgebildeten Lagers und somit insbesondere der Erläuterung der speziellen Gestaltung der Arbeitskammern 4, 4' dienen. Das Lager besteht aus dem metallischen Innenteil 1, dem elastomeren Lagerkörper 2, dem vorzugsweise ebenfalls metallischen Außenteil 3 und der die vorgenannten Teile aufnehmenden, im Allgemeinen ebenfalls metallischen Lagerhülse 5. Der elastomere Lagerkörper 2 ist zwischen dem Innenteil 1 und dem Außenteil 3 angeordnet und mit ihnen durch Vulkanisation verbunden. Ferner ist in den Lagerkörper 2 ein sich parallel zur Lagerachse 12 erstreckendes Zwischenblech 6 einvulkanisiert, durch welches der Lagerkörper in zwei Federpakete 7, 8 unterteilt wird. Das innere Federpaket 7 wirkt als Arbeitspaket, während das äußere, die Arbeitskammern 4, 4' mit dem Fluid aufnehmende Federpaket 8, welches durch das Zwischenblech 6 und das Außenteil 3 begrenzt wird, hinsichtlich der Veränderlichkeit der Steifigkeit als Schaltpaket wirkt.

Von besonderer Bedeutung ist die spezielle Gestaltung der Arbeitskammern 4, 4'. Diese bestehen jeweils aus einer Mehrzahl, sich in radialer Richtung r erstreckender Kammerabschnitte 9₁ - 9ₙ, welche durch einen sich in axialer Richtung a erstreckenden Kammerabschnitt 10 miteinander verbunden sind. Die radialen Kammerabschnitte 9₁ - 9ₙ verlaufen durch das Außenteil 3 und ragen kammartig, durch das Zwischenblech 6 begrenzt, in das Elastomer des Lagerkörpers 2 hinein. Hierdurch wird der elastomere Lagerkörper, wie aus der Figur ersichtlich, im Bereich des Schaltpakets 8 in der axialen Richtung a segmentiert. Dies führt zu einer Vergrößerung der freien Oberfläche des Elastomers, mit dem Effekt, dass selbst bei einer vorgegebenen hohen Steifigkeitsspreizung (also bei einer hohen Differenz zwischen der Steifigkeit im ungefüllten Zustand einer Arbeitskammer 4, 4' und der Steifigkeit der mit dem Fluid gefüllten Kammer 4, 4') stets nur verhältnismäßig geringe Drücke in der jeweiligen Arbeitskammer 4, 4' auftreten. Zur Realisierung der Schaltbarkeit sind vorzugsweise die beiden Arbeitskammern 4, 4' durch einen hier nicht gezeigten Kanal miteinander verbunden, in dem ein ebenfalls nicht gezeigtes schaltbares Ventil angeordnet ist. Denkbar ist aber auch die Anordnung einer volumennachgiebigen Ausgleichskammer axial oberhalb und/oder unterhalb der Arbeitskammern 4, 4' mit einem verbindenden Kanal zu den Arbeitskammern und einem darin angeordneten schaltbaren Ventil. Bei dem in der Figur gezeigten Buchsenlager ist im Bereich des inneren Federpakets 7, das heißt des Arbeitspakets, ein zusätzliches Einlegeelement 11 beziehungsweise Zwischenblech eingefügt. Durch dieses zusätzliche Einlegeelement 11 wird die auftretende Schubsteifigkeit verringert.

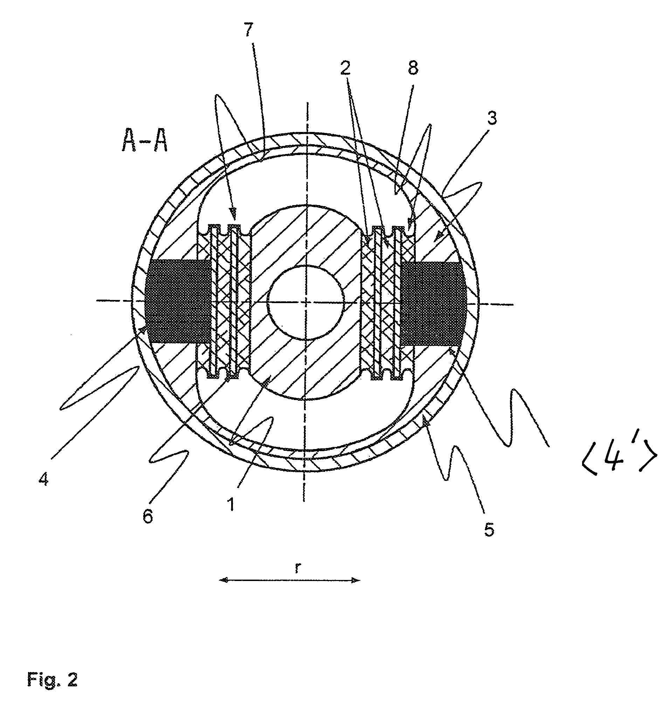

Die Fig. 2 zeigt das erfindungsgemäß gestaltete Lager entsprechend der Fig. 1 nochmals in einem Axialschnitt, wobei der Schnitt entlang der Linie A-A in der Fig. 1 geführt ist.

### Bezugszeichenliste

- 1: Innenteil
- 2: Lagerkörper
- 3: Außenteil
- 4, 4': Arbeitskammer
- 5: Lagerhülse
- 6: Einlegeelement (zum Beispiel Zwischenblech)
- 7: inneres Federpaket (Arbeitspaket)
- 8: äußeres Federpaket (Schaltpaket)
- 9₁ - 9ₙ: Kammerabschnitt
- 10: Kammerabschnitt
- 11: Einlegeelement
- 12: Lagerachse

## Patentansprüche

1. Elastomeres Buchsenlager mit in radialer Richtung (r) schaltbarer Steifigkeit, mit einem zylinderförmigen metallischen Innenteil (1), einem das Innenteil umgebenden rohrförmigen Außenteil (3), einem zwischen dem Innenteil (1) und dem Außenteil (3) angeordneten elastomeren Lagerkörper (2) und mindestens einem Paar bezüglich der Umfangsrichtung (u) des Buchsenlagers versetzt angeordneter Arbeitskammern (4, 4') zur Aufnahme eines Fluids sowie mit einer die vorgenannten Teile aufnehmenden Lagerhülse (5), wobei durch die mittels eines Aktors ermöglichte Sperrung oder Freigabe des Zuflusses von Fluid in mindestens eine der Arbeitskammern (4, 4') beziehungsweise des Abflusses von Fluid aus mindestens einer der Arbeitskammern (4, 4) die radiale Steifigkeit des Buchsenlagers im Bereich der Arbeitskammern (4, 4') veränderbar ist, **dadurch gekennzeichnet, dass** der Lagerkörper (2) durch mindestens ein darin parallel zur Lagerachse (12) angeordnetes Einlegeelement (6) bezüglich der radialen Richtung (r) in mindestens zwei Federpakete (7, 8), mit einem radial äußeren, die Arbeitskammern (4, 4') aufnehmenden Schaltpaket (8) unterteilt ist und dass die Arbeitskammern (4, 4') jeweils in mehrere sich innerhalb des Lagerkörpers (2) und des Außenteils (3) in der radialen Richtung (r) erstreckende Kammerabschnitte (9₁ - 9ₙ) und mindestens einen Kammerabschnitte (9₁ - 9ₙ) miteinander verbindenden, sich in axialer Richtung (a) erstreckenden Kammerabschnitt (10) unterteilt sind, so dass der elastomere Lagerkörper (2) in dem von dem Einlegeelement (6) und dem Außenteil (3) begrenzten Schaltpaket (8) durch die in ihn hineinragenden Kammerabschnitte (9₁ - 9ₙ) der Arbeitskammern (4, 4') in der axialen Richtung (a) segmentiert ist.

2. Elastomeres Buchsenlager nach Anspruch 1, **dadurch gekennzeichnet, dass** die Kammerabschnitte (9₁ - 9ₙ) durch einen sich innerhalb des Außenteils (3) erstreckenden Abschnitt (10) miteinander verbunden sind.

3. Elastomeres Buchsenlager nach Anspruch 1 oder 2, **dadurch gekennzeichnet, dass** die Arbeitskammern (4, 4') eines Kammerpaars durch einen Kanal miteinander verbunden sind, durch dessen Sperrung der Zufluss von Fluid in eine in diesem Moment von Fluid weitgehend entleerte Arbeitskammer (4, 4') des Kammerpaars und der Abfluss von Fluid aus der anderen, in diesem Moment mit dem Fluid gefüllten Arbeitskammer (4', 4) des Kammerpaars gesperrt wird, so dass das Buchsenlager im Bereich der von Fluid entleerten Arbeitskammer (4, 4') einen Zustand geringer radialer Steifigkeit und im Bereich der mit dem Fluid gefüllten Arbeitskammer (4', 4) einen Zustand hoher radialer Steifigkeit annimmt, während das Buchsenlager im Falle einer Freigabe des die Arbeitskammern (4, 4') verbindenden Kanals im Bereich beider Arbeitskammern (4, 4') des Kammerpaares eine mittlere radiale Steifigkeit aufweist.

4. Elastomeres Buchsenlager nach Anspruch 1 oder 2, **dadurch gekennzeichnet, dass** axial oberhalb und/oder unterhalb der Arbeitskammern (4, 4') eines Kammerpaares eine Ausgleichskammer mit hoher Volumennachgiebigkeit ausgebildet ist und dass durch die wechselweise Sperrung und die vorübergehende Freigabe die Ausgleichskammer mit den Arbeitskammern (4, 4') des Kammerpaares oder die Ausgleichskammern mit je einer Arbeitskammer (4, 4') des Kammerpaares verbindender Kanäle die radiale Steifigkeit des Lagers im Bereich der Arbeitskammern (4, 4') des betreffenden Kammerpaares schaltbar ist, wobei in einem ersten Schaltzustand des Buchsenlagers für beide Arbeitskammern (4, 4') der Zufluss von Fluid aus der jeweiligen Ausgleichskammer gesperrt und in einem zweiten Schaltzustand für beide Arbeitskammern (4, 4') der Abfluss von Fluid in die jeweilige Ausgleichskammer gesperrt ist.

5. Elastomeres Buchsenlager nach einem der Ansprüche 1 bis 4, **dadurch gekennzeichnet, dass** zur Sperrung oder Freigabe des Fluidzuflusses zu den Arbeitskammern (4, 4') und des Fluidabflusses von den Arbeitskammern (4, 4') in einem die betreffenden Arbeitskammern (4, 4') untereinander verbindenden Kanal oder in jedem eine solche Arbeitskammer (4, 4') mit einer Ausgleichskammer verbindenden Kanal ein schaltbares Ventil angeordnet ist.

6. Elastomeres Buchsenlager nach einem der Ansprüche 1 bis 4, **dadurch gekennzeichnet, dass** das Fluid eine elektrorheologische Flüssigkeit ist, in welche mindestens ein Paar mit einer Spannung gegensätzlicher Polarität beaufschlagbarer Elektroden hineinragt, wobei durch unterschiedliche Spannungen an den Elektroden die Viskosität des Fluids veränderbar ist, so dass ein die Arbeitskammern (4, 4') eines Kammerpaares untereinander verbindender Kanal oder ein eine solche Arbeitskammer (4, 4') mit einer Ausgleichskammer verbindender Kanal je nach der an den Elektroden anliegenden Spannung von dem Fluid passierbar ist oder nicht.

7. Elastomeres Buchsenlager nach einem der Ansprüche 1 bis 4, **dadurch gekennzeichnet, dass** das Fluid eine magnetorheologische Flüssigkeit ist und als Aktoren Mittel zur Erzeugung eines das Fluid durchsetzenden magnetischen Feldes angeordnet sind, wobei mittels des Magnetfelds die Viskosität des Fluids veränderbar ist, so dass ein die Arbeitskammern (4, 4') eines Kammerpaares untereinander verbindender Kanal oder ein eine solche Arbeitskammer (4, 4') mit einer Ausgleichskammer verbindender Kanal, je nach Stärke des auf das Fluid einwirkenden Magnetfeldes, von dem Fluid passierbar ist oder nicht.

8. Elastomeres Buchsenlager nach Anspruch 4, **dadurch gekennzeichnet, dass** bei den eine jeweilige Arbeitkammer (4, 4') mit einer Ausgleichskammer verbindenden Kanälen das Verhältnis zwischen Kanalweite und Kanallänge gleich oder größer 1 ist.

9. Elastomeres Buchsenlager nach einem der Ansprüche 1 bis 8, **dadurch gekennzeichnet, dass** im Bereich des inneren, durch das Innenteil (1) und das Einlegeelement (6) begrenzten Federpakets (7) ein zusätzliches Einlegeelement (11) in den Lagerkörper (2) einvulkanisiert ist.

## Claims

1. Elastomeric sleeve bearing having switchable stiffness in the radial direction (r), having a cylindrical metal inner part (1), a tubular outer part (3) surrounding the inner part, an elastomeric bearing body (2) arranged between the inner part (1) and the outer part (3), and at least one pair of working chambers (4, 4'), arranged in an offset manner with respect to the circumferential direction (u) of the sleeve bearing, for holding a fluid, and also having a bearing sleeve (5) that holds the abovementioned parts, wherein as a result of the blocking or unblocking of the inflow of fluid into at least one of the working chambers (4, 4') or of the outflow of fluid out of at least one of the working chambers (4, 4'), said blocking or unblocking being made possible by means of an actuator, the radial stiffness of the sleeve bearing in the region of the working chambers (4, 4') is changeable, **characterized in that** the bearing body (2) is subdivided with respect to the radial direction (r) by at least one insert element (6) arranged therein parallel to the bearing axis (12) into at least two spring packages (7, 8), with a radially outer switch package (8) holding the working chambers (4, 4'), and **in that** the working chambers (4, 4') are each subdivided into a plurality of chamber sections (9₁ - 9ₙ) extending in the radial direction (r) within the bearing body (2) and the outer part (3), and at least one chamber section (10) connecting chamber sections (9₁ - 9ₙ) together and extending in the axial direction (a), such that the elastomeric bearing body (2) is segmented in the axial direction (a), in the switch package (8) bounded by the insert element (6) and the outer part (3), by the chamber sections (9₁ - 9ₙ), projecting into said elastomeric bearing body (2), of the working chambers (4, 4').

2. Elastomeric sleeve bearing according to Claim 1, **characterized in that** the chamber sections (9₁ - 9ₙ) are connected together by a section (10) extending within the outer part (3).

3. Elastomeric sleeve bearing according to Claim 1 or 2, **characterized in that** the working chambers (4, 4') of a pair of chambers are connected together by a duct, the blocking of which blocks the inflow of fluid into a working chamber (4, 4') of the pair of chambers, said working chamber (4, 4') being largely emptied of fluid at that moment, and the outflow of fluid from the other working chamber (4', 4) of the pair of chambers, said other working chamber (4', 4) being filled with the fluid at that moment, such that the sleeve bearing assumes a state of low radial stiffness in the region of the working chamber (4, 4') emptied of fluid and a state of high radial stiffness in the region of the working chamber (4', 4) filled with the fluid, while, in the event of the duct connecting the working chambers (4, 4') being unblocked, the sleeve bearing has a mean radial stiffness in the region of the two working chambers (4, 4') of the pair of chambers.

4. Elastomeric sleeve bearing according to Claim 1 or 2, **characterized in that** a compensation chamber having high volume flexibility is formed axially above and/or beneath the working chambers (4, 4') of a pair of chambers, and **in that** as a result of the alternate blocking and the temporary unblocking of ducts connecting the compensation chamber to the working chambers (4, 4') of the pair of chambers or connecting the compensation chambers with in each case one working chamber (4, 4') of the pair of chambers, the radial stiffness of the bearing is switchable in the region of the working chambers (4, 4') of the pair of chambers in question, wherein, in a first switching state of the sleeve bearing, for both working chambers (4, 4') the inflow of fluid from the respective compensation chamber is blocked and, in a second switching state, for both working chambers (4, 4') the outflow of fluid into the respective compensation chamber is blocked.

5. Elastomeric sleeve bearing according to one of Claims 1 to 4, **characterized in that** in order to block or unblock the fluid inflow into the working chambers (4, 4') and the fluid outflow out of the working chambers (4, 4'), a switchable valve is arranged in a duct connecting the working chambers (4, 4') in question to one another or in each duct connecting one such working chamber (4, 4') to a compensation chamber.

6. Elastomeric sleeve bearing according to one of Claims 1 to 4, **characterized in that** the fluid is an electrorheological liquid, into which there projects at least one pair of electrodes to which a voltage of opposite polarity is applicable, wherein the viscosity of the fluid is changeable by different voltages at the electrodes, such that a duct connecting the working chambers (4, 4') of a pair of chambers to one another or a duct connecting one such working chamber (4, 4') to a compensation chamber is passable or impassable by the fluid depending on the voltage present at the electrodes.

7. Elastomeric sleeve bearing according to one of Claims 1 to 4, **characterized in that** the fluid is a magnetorheological liquid and means for generating a magnetic field that passes through the fluid are arranged as actuators, wherein the viscosity of the fluid is changeable by means of the magnetic field, such that a duct connecting the working chambers (4, 4') of a pair of chambers to one another or a duct connecting one such working chamber (4, 4') to a compensation chamber is passable or impassable by the fluid depending on the strength of the magnetic field acting on the fluid.

8. Elastomeric sleeve bearing according to Claim 4, **characterized in that** in the ducts connecting each working chamber (4, 4') to a compensation chamber, the ratio between the duct width and the duct length is equal to or greater than 1.

9. Elastomeric sleeve bearing according to one of Claims 1 to 8, **characterized in that** in the region of the inner spring package (7) bounded by the inner part (1) and the insert element (6), an additional insert element (11) is vulcanized into the bearing body (2).

## Revendications

1. Palier à douille élastomère à rigidité réglable dans la direction radiale (r), comprenant une partie interne métallique de forme cylindrique (1), une partie externe de forme tubulaire (3) entourant la partie interne, un corps de palier élastomère (2) disposé entre la partie interne (1) et la partie externe (3) et au moins une paire de chambres de travail (4, 4') disposées de manière décalée par rapport à la direction périphérique (u) du palier à douille, pour recevoir un fluide, et comprenant aussi un manchon de palier (5) recevant lesdites pièces, dans lequel la rigidité radiale du palier à douille dans la région des chambres de travail (4, 4') peut être modifiée par le blocage ou la libération, effectuées au moyen d'un actionnement, de l'afflux de fluide dans au moins l'une des chambres de travail (4, 4'), ou de l'évacuation de fluide hors d'au moins l'une des chambres de travail (4, 4'), **caractérisé en ce que** le corps de palier (2) est divisé par au moins un élément d'insertion (6) disposé dans celui-ci parallèlement à l'axe de palier (12), par rapport à la direction radiale (r), en au moins deux paquets de ressort (7, 8), un paquet de commutation (8) radialement extérieur recevant les chambres de travail (4, 4'), et **en ce que** les chambres de travail (4, 4') sont divisées à chaque fois en plusieurs portions de chambre (9₁ - 9ₙ) s'étendant à l'intérieur du corps de palier (2) et de la partie externe (3) dans la direction radiale (r) et en au moins une portion de chambre (10) reliant entre elles les portions de chambre (9₁ - 9ₙ) et s'étendant dans la direction axiale (a), de sorte que le corps de palier élastomère (2) soit segmenté dans la direction axiale (a) dans le paquet de commutation (8) limité par l'élément d'insertion (6) et la partie externe (3) par les portions de chambre (9₁ - 9ₙ) des chambres de travail (4, 4') pénétrant dans ledit paquet de commutation.

2. Palier à douille élastomère selon la revendication 1, **caractérisé en ce que** les portions de chambre (9₁ - 9ₙ) sont reliées les unes aux autres par une portion (10) s'étendant à l'intérieur de la partie externe (3).

3. Palier à douille élastomère selon la revendication 1 ou 2, **caractérisé en ce que** les chambres de travail (4, 4') d'une paire de chambres sont reliées l'une à l'autre par un canal dont le blocage bloque l'afflux de fluide dans une chambre de travail (4, 4') de la paire de chambres à ce moment essentiellement purgée de fluide et bloque l'évacuation de fluide hors de l'autre chambre de travail (4, 4') de la paire de chambres à ce moment remplie de fluide, de sorte que le palier à douille, dans la région de la chambre de travail (4, 4') purgée de fluide, adopte un état de moindre rigidité radiale, et dans la région de la chambre de travail (4, 4') remplie de fluide, adopte un état de plus grande rigidité radiale, tandis que le palier à douille, dans le cas d'une libération du canal reliant les chambres de travail (4, 4'), présente une rigidité radiale moyenne dans la région des deux chambres de travail (4, 4') de la paire de chambres.

4. Palier à douille élastomère selon la revendication 1 ou 2, **caractérisé en ce qu'**une chambre de compensation axialement au-dessus et/ou en dessous des chambres de travail (4, 4') d'une paire de chambres est réalisée avec une plus grande flexibilité volumique et **en ce que** par le blocage et la libération temporaire alternés de canaux reliant la chambre de compensation aux chambres de travail (4, 4') de la paire de chambres ou reliant les chambres de compensation à chacune des chambres de travail (4, 4') de la paire de chambres, la rigidité radiale du palier dans la région des chambres de travail (4, 4') de la paire de chambres concernées peut être commutée, l'amenée de fluide provenant de la chambre de compensation respective étant bloquée dans un premier état de commutation du palier à douille pour les deux chambres de travail (4, 4') et l'évacuation de fluide dans la chambre de compensation respective étant bloquée dans un deuxième état de commutation pour les deux chambres de travail (4, 4').

5. Palier à douille élastomère selon l'une quelconque des revendications 1 à 4, **caractérisé en ce que** pour le blocage ou la libération de l'amenée de fluide aux chambres de travail (4, 4') et de l'évacuation de fluide depuis les chambres de travail (4, 4'), une soupape commutable est disposée dans un canal reliant l'une à l'autre les chambres de travail (4, 4') concernées ou dans chaque canal reliant une telle chambre de travail (4, 4') à une chambre de compensation.

6. Palier à douille élastomère selon l'une quelconque des revendications 1 à 4, **caractérisé en ce que** le fluide est un liquide électro-rhéologique, dans lequel plonge au moins une paire d'électrodes pouvant être sollicitées avec une tension de polarité opposée, la viscosité du fluide pouvant être modifiée par des tensions différentes appliquées aux électrodes, de sorte qu'un canal reliant l'une à l'autre les chambres de travail (4, 4') d'une paire de chambres ou un canal reliant une telle chambre de travail (4, 4') à une chambre de compensation puisse être parcouru par le fluide ou pas, en fonction de la tension appliquée aux électrodes.

7. Palier à douille élastomère selon l'une quelconque des revendications 1 à 4, **caractérisé en ce que** le fluide est un liquide magnéto-rhéologique et des moyens pour générer un champ magnétique traversant le fluide sont disposés en tant qu'actionneurs, la viscosité du fluide pouvant être modifiée au moyen du champ magnétique, de sorte qu'un canal reliant l'une à l'autre les chambres de travail (4, 4') d'une paire de chambres ou un canal reliant une telle chambre de travail (4, 4') à une chambre de compensation puisse être parcouru par le fluide ou pas, en fonction de l'intensité du champ magnétique agissant sur le fluide.

8. Palier à douille élastomère selon la revendication 4, **caractérisé en ce que** dans le cas des canaux reliant une chambre de travail (4, 4') respective à une chambre de compensation, le rapport entre la largeur du canal et la longueur du canal est supérieur ou égal à 1.

9. Palier à douille élastomère selon l'une quelconque des revendications 1 à 8, **caractérisé en ce que** dans la région du paquet de ressorts (7) limité par la partie interne (1) et l'élément d'insertion (6), un élément d'insertion supplémentaire (11) est vulcanisé dans le corps de palier (2).
